# EUROPÄISCHE PATENTSCHRIFT

(11) **EP 1 986 079 B1**
(45) Veröffentlichungstag und Bekanntmachung des Hinweises auf die Patenterteilung: **11.07.2012**
(21) Anmeldenummer: 08103527.1
(22) Anmeldetag: 14.04.2008
(51) Int. Cl.: G06F 1/26

(54) **Stromversorgungseinheit für einen Computer, Hauptplatine für einen Computer und solche aufweisender Computer**
Power supply unit for a computer, motherboard for a computer and computer with same
Unité d'alimentation pour un ordinateur, carte mère pour un ordinateur et ordinateur en étant équipé

(30) Priorität: 25.04.2007 DE 102007019579
(43) Veröffentlichungstag der Anmeldung: 29.10.2008
(73) Patentinhaber: Fujitsu Technology Solutions Intellectual Property GmbH, 80807 München (DE)
(72) Erfinder: Steidle, Andreas, 86199, Augsburg (DE); Rau, Stefan, 86356, Heusäß (DE); Häußermann, Rudolf, 86150, Augsburg (DE)
(74) Vertreter: Epping - Hermann - Fischer

(56) Entgegenhaltungen:
- WO-A1-03/001349
- WO-A2-03/029944
- US-A- 5 955 797

## Beschreibung

Die Erfindung betrifft eine Stromversorgungseinheit für einen Computer mit einem ersten Eingang zur Zuführung einer Wechselspannung und einem ersten Ausgang für eine erste Versorgungsgleichspannung. Außerdem betrifft die Erfindung eine Hauptplatine für einen Computer mit einer Spannungswandlereinheit, die dazu eingerichtet ist, im Betrieb zur einer ersten Versorgungsgleichspannung mindestens eine zweite Versorgungsgleichspannung zu erzeugen, wobei ein Eingang vorgesehen ist zum Empfang der ersten Versorgungsgleichspannung.

Stromversorgungseinheiten für Computer sind als separate Baugruppen ausgeführt, beispielsweise ist bei einem Desktop- oder Tower-Gehäuse die Stromversorgungseinheit eine Baugruppe mit eigenem Gehäuse, welches an der Rückseite des Computergehäuses angeordnet ist. Die Stromversorgungseinheit ist dazu eingerichtet, eine Eingangswechselspannung in eine Ausgangsgleichspannung umzusetzen. Über Spannungsregelschaltungen werden verschiedene stabilisierte Gleichspannungen bereitgestellt, die für die Hauptplatine, Festplatten, CD-Laufwerke und so weiter verwendet werden können. Außerdem besitzt der Versorgungseinheit einen Lüfter, der einerseits zur Kühlung der Komponenten der Stromversorgungseinheit dient, als auch Frischluft in das Innere des Computer befördert, um die übrigen Komponenten des Computers zu kühlen.

Die Ausgangsspannungen eines Netzteiles sind in der Regel +/-12 Volt, +/-5 Volt und +3,3 Volt. Diese Gleichspannungen sind notwendig, da sie einerseits von den gängigen Hauptplatinen benötigt werden, andererseits sind sie notwendig, um die weiteren Komponenten wie Festplatten oder DVD-Laufwerke mit einer Betriebsspannung zu versorgen. Zusätzlich verfügen gängige PC-Netzteile über eine "5V AUX" genannte Hilfsspannung, die immer anliegt, wenn das Netzteil mit der Versorgungswechselspannung verbunden ist.

Wenn eine der Komponenten, beispielsweise die Hauptplatine, weitere Spannungen benötigt, so müssen diese selber erzeugt werden. Zu diesem Zweck kann auf der Hauptplatine ein weiterer Spannungsregler vorgesehen werden, der beispielsweise aus der Spannung von 3,3 Volt eine Spannung von 2,5 Volt erzeugt. Dies ist insbesondere im Hinblick auf den Stromverbrauch von Computern erforderlich, da Halbleiter, die mit geringeren Spannungen arbeiten, auch einen geringeren Leistungsbedarf haben. Dies verringert die Verluste, die oft die maximale Taktfrequenz bestimmen.

Es ist Aufgabe der Erfindung, eine Stromversorgungseinheit für einen Computer beziehungsweise eine Hauptplatine für einen Computer anzugeben, so dass die Spannungsversorgung kostengünstiger realisiert werden kann.

Diese Aufgabe wird durch eine Stromversorgungseinheit der eingangs genannten Art gelöst, die dadurch gekennzeichnet ist, dass sie einen zweiten Eingang zur Zuführung mindestens einer zweiten Versorgungsgleichspannung aufweist, wobei die wenigstens eine weitere Versorgungsgleichspannung aus der ersten Versorgungsgleichspannung in der Hauptplatine erzeugt wird, und dass sie einen zweiten Ausgang für die erste und zumindest eine zweite Versorgungsgleichspannung aufweist und dass sie weiterhin dazu eingerichtet ist, die mindestens eine zweite Versorgungsgleichspannung vom zweiten Eingang auf den zweiten Ausgang weiterzuleiten.

Durch die erfindungsgemäße Stromversorgungseinheit wird ermöglicht, dass eine erste Versorgungsgleichspannung in der Stromversorgungseinheit erzeugt wird, weitere Versorgungsgleichspannungen aber auf der Hauptplatine erzeugt werden. Einbaugeräte wie Festplatten oder DVD-Laufwerke können jedoch wie gewohnt an der Stromversorgungseinheit angeschlossen werden, da die weiteren benötigten Spannungen von der Hauptplatine zu der Stromversorgungseinheit zurückgeleitet werden und dort an dem zweiten Ausgang bereitgestellt werden. Die Stromversorgungseinheit stellt somit nicht nur die selbsterzeugten Ausgangsspannungen zur Verführung, sondern auch solche Versorgungsspannungen, die auf der Hauptplatine erzeugt werden. Die Stromversorgungseinheit übernimmt somit die Funktion einerseits einer Spannungserzeugung, andererseits aber auch die Funktion eines Verteilers.

Die Aufgabe wird weiterhin durch eine Hauptplatine für einen Computer gelöst, wie sie eingangs beschrieben wurde, wobei ein Ausgang vorgesehen ist zur Zuführung der mindestens einen, auf der Hauptplatine erzeugten zweiten Versorgungsgleichspannung zu einer Stromversorgungseinheit.

Besonders vorteilhaft bei der erfindungsgemäßen Stromversorgungseinheit ist, wenn die Weiterleitung ausschließlich durch passive Komponenten oder elektromechanische Schalter erfolgt. Dadurch wird eine verlustlose Weiterleitung der von der Hauptplatine erzeugten Spannung zu dem Ausgang der Stromversorgungseinheit gewährleistet.

Weitere vorteilhafte Ausgestaltungen der Erfindung sind in den Unteransprüchen angegeben.

Die Erfindung wird nachfolgend anhand von Ausführungsbeispielen näher erläutert.

Es zeigt:
Figur 1 ein schematisches Schaltbild eines ersten Ausführungsbeispieles,
Figur 2 ein schematisches Schaltbild eines zweiten Ausführungsbeispieles,
Figur 3 ein schematisches Schaltbild eines dritten Ausführungsbeispieles,
Figur 4 ein schematisches Schaltbild einer erfindungsgemäßen Hauptplatine und
Figur 5 einen erfindungsgemäßen Computer.

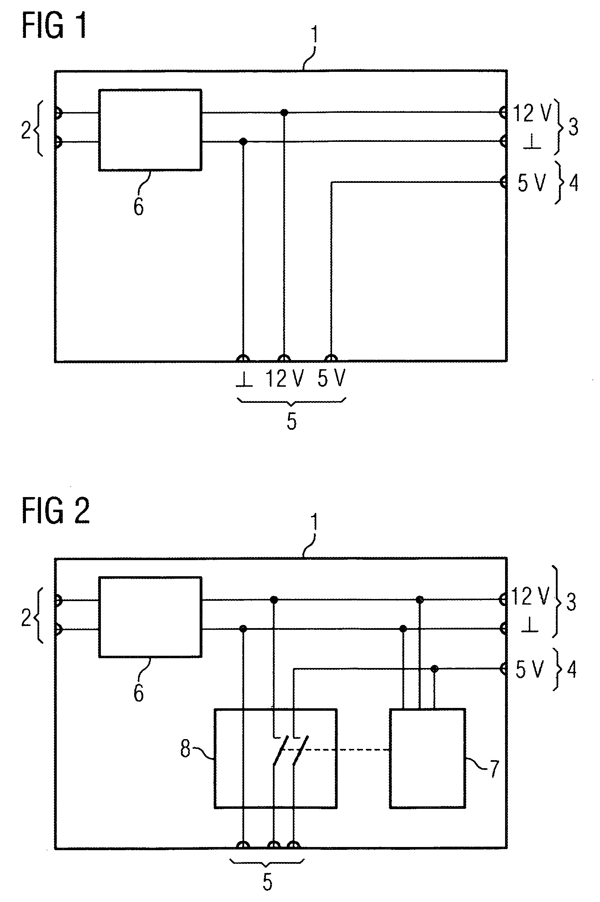

In Figur 1 ist eine schematische Darstellung einer erfindungsgemäßen Stromversorgungseinheit dargestellt. Die Stromversorgungseinheit 1 weist einen Eingang 2 zur Zuführung einer Wechselspannung im Bereich von typischerweise 100 Volt bis 240 Volt auf. Die Eingangswechselspannung wird einem Schaltnetzteil 6 zugeführt. Das Schaltnetzteil wandelt die Eingangswechselspannung in eine Gleichspannung von beispielsweise 12 Volt um.

In dem Schaltnetzteil wird zunächst die Wechselspannung gleichgerichtet. Die gleichgerichtete Spannung wird zerhackt und somit ein Rechtecksignal mit einer verhältnismäßig hohen Frequenz von einigen zehn Kilohertz erzeugt. Ein Übertrager erzeugt aus diesem hochfrequenten Signal einer hohen Spannung eine Wechselspannung mit einer geringeren Spannung. Diese wird nachfolgend gleichgerichtet und geglättet, so dass sie als Versorgungsgleichspannung zur Verfügung steht. Über eine Regelschleife vom Ausgang des Schaltnetzteils zu dem Zerhacker wird sichergestellt, dass die Ausgangsspannung in einem Nennbereich liegt. Selbstverständlich wäre eine erfindungsgemäße Stromversorgungseinheit auch mit einem konventionellen Transformator machbar.

Die Versorgungsgleichspannung von 12 Volt wird an einem Ausgang 3 bereitgestellt. Dieser Ausgang wird mit einer Hauptplatine verbunden, um diese mit einer Versorgungsspannung zu versorgen.

Des Weiteren weist die Stromversorgungseinheit 1 einen zweiten Eingang 4 auf, über den eine Versorgungsgleichspannung zugeführt werden kann, die ungleich der ersten Versorgungsgleichspannung ist. Im gezeigten Ausführungsbeispiel beträgt sie 5 Volt. Die 5 Volt-Versorgungsgleichspannung wurde durch eine Spannungswandlereinheit der Hauptplatine erzeugt. Die 5 Volt-Versorgungsgleichspannung dient einerseits zur Versorgung von Komponenten auf der Hauptplatine, andererseits kann sie auch vorgesehen werden, um Geräte wie Festplatten oder DVD-Laufwerke zu versorgen. Die Rückführung der 5 Volt-Versorgungsgleichspannung zu der Stromversorgungseinheit 1 ermöglicht, dass an einem zweiten Ausgang 5 nicht nur die in der Stromversorgungseinheit 1 erzeugte Versorgungsgleichspannung von 12 Volt zur Verfügung steht, sondern auch die auf der Hauptplatine erzeugte Spannung von 5 Volt. In einer vorteilhaften Ausgestaltung sind die Versorgungsgleichspannungen von 12 Volt und 5 Volt über einen gemeinsamen Steckverbinder abgreifbar.

Während bei der Figur 1 die Verbindung des zweiten Eingangs 4 mit dem zweiten Ausgang 5 über eine feste Verdrahtung erfolgt, ist bei dem Ausführungsbeispiel nach Figur 2 eine Schalteinheit 8 vorgesehen, durch die die Verbindungen der Versorgungsgleichspannungen zu dem zweiten Ausgang 5 unterbrochen werden können. Bei der Schalteinheit 8 handelt es sich um ein Relais, welches von einer Steuereinheit 7 angesteuert wird. Dadurch ist es möglich, beispielsweise beim Einschalten des Computers die Versorgungsgleichspannung von 5 Volt erst dann auf den Ausgang 5 zu schalten, wenn sie in ihrem Nennbereich liegt. Fehlfunktionen angeschlossener Geräte werden damit verhindert. Das Zuschalten könnte nach einer gewissen Zeitdauer erfolgen, beispielsweise indem ein RC-Glied verwendet wird oder indem ein Monoflop von der 12 Volt-Spannung getriggert wird und dann nach einer definierten Zeitdauer zurückfällt, dabei das Relais 8 ansteuert und damit die Versorgung des 5 Volt-Anschlusses freigibt. Andererseits kann auch eine aktive Überwachung der 12 Volt- und der 5 Volt-Spannung vorgesehen sein, um so das Erreichen eines spezifikationsgemäßen Spannungsniveaus festzustellen.

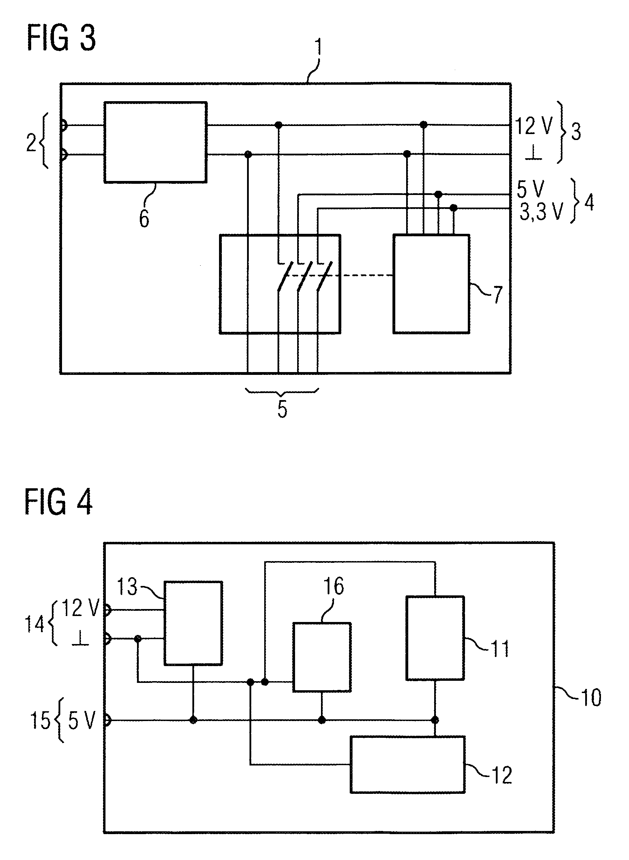

Die Figur 3 zeigt ein erweitertes Ausführungsbeispiel gemäß Figur 2. Der zweite Eingang 4 ist dabei so ausgelegt, dass auch eine 3,3 Volt-Versorgungsgleichspannung empfangen werden kann. Diese wird ebenfalls auf die Schalteinheit 8 weitergeleitet, von wo aus sie zu dem zweiten Ausgang 5 durchgeschaltet werden kann. Selbstverständlich wäre in Abwandlung dieses Ausführungsbeispiels auch eine direkte Verbindung des zweiten Eingangs 4 mit dem zweiten Ausgang 5 möglich.

Die Figur 4 zeigt eine erfindungsgemäße Hauptplatine. Sie weist einen Eingang 14 auf, der im Betrieb mit der Stromversorgungseinheit verbunden ist, so dass über den Eingang 14 der Hauptplatine eine Versorgungsgleichspannung zur Verfügung gestellt werden kann. Im vorliegenden Ausführungsbeispiel handelt es sich um die Spannung von 12 Volt, die von der Stromversorgungseinheit 1 erzeugt wurde. Die Hauptplatine 10 verfügt über eine Spannungswandlereinheit 13, die aus der 12 Volt-Versorgungsgleichspannung zumindest eine 5 Volt-Versorgungsgleichspannung erzeugt. Die Versorgungsspannung von 5 Volt dient zur Versorgung von Komponenten der Hauptplatine 10 wie beispielsweise einer CPU 11, eines Chipsatzes 16 oder eines RAM-Speichers 12. Außerdem wird die Spannung von 5 Volt auf einen Ausgang 15 gelegt, der wiederum mit der Stromversorgungseinheit 1 verbunden werden kann, so dass die auf der Hauptplatine 10 im Spannungswandler 13 erzeugte Spannung externen Komponenten wie einer Festplatte oder einem DVD-Laufwerk bereitgestellt werden kann. Vorzugsweise ist für den Eingang 14 oder den Ausgang 15 ein gemeinsamer Steckverbinder vorgesehen. Neben der Versorgungsgleichspannung von 5 Volt können auch weitere Versorgungsgleichspannungen von beispielsweise 3,3 Volt oder 2,5 Volt erzeugt werden, die ebenfalls über den Ausgang 15 zu der Stromversorgungseinheit geleitet werden.

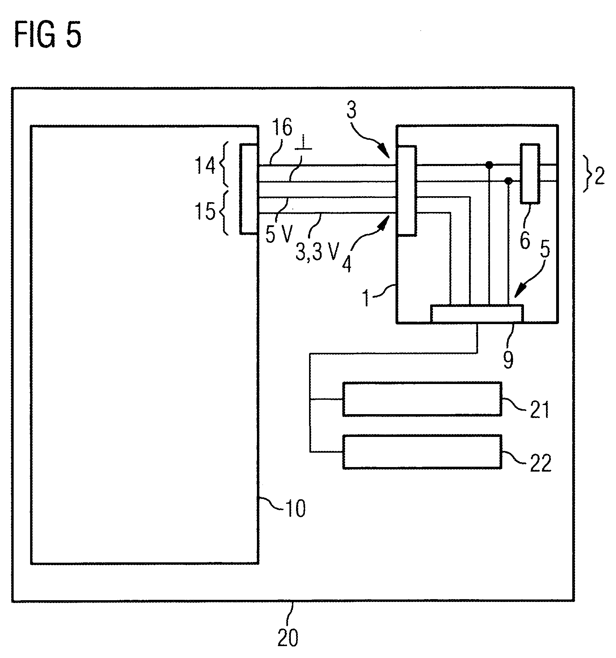

In der Figur 5 ist ein erfindungsgemäßer Computer dargestellt, der eine Stromversorgungseinheit gemäß einer der Figuren 1 bis 3 sowie eine Hauptplatine gemäß der Figur 4 aufweist. Die Ausgänge 3 und 4 der Stromversorgungseinheit 1 sind mit Eingängen 14 beziehungsweise 15 der Hauptplatine 10 verbunden. Die in der Stromversorgungseinheit 1 erzeugte Versorgungsgleichspannung wird der Hauptplatine 10 zugeführt und die dort erzeugten Versorgungsgleichspannungen werden der Stromversorgungseinheit 1 zugeführt. Somit stehen sowohl die in der Stromversorgungseinheit als auch die auf der Hauptplatine erzeugten Versorgungsgleichspannungen an dem Ausgang 5 der Stromversorgungseinheit 1 zur Verfügung, wo sie über einen gemeinsamen Steckverbinder 9 wie bei einer konventionellen Stromversorgungseinheit abgegriffen werden können. Zusätzliche Komponenten wie eine Festplatte 21 oder ein DVD-Laufwerk 22 werden an dem Steckverbinder 9 zu ihrer Stromversorgung angeschlossen.

Weitere Ausführungsbeispiele sind von der Erfindung umfasst, auch wenn sie in den vorliegenden Figuren nicht dargestellt sind, und liegen im Ermessen des Fachmannes.

### Bezugszeichenliste

- 1: Stromversorgungseinheit
- 2: erster Eingang der Stromversorgungseinheit
- 3: erster Ausgang der Stromversorgungseinheit
- 4: zweiter Eingang der Stromversorgungseinheit
- 5: zweiter Ausgang der Stromversorgungseinheit
- 6: Schaltnetzteil
- 7: Steuereinheit
- 8: Schalteinheit
- 9: Steckverbinder
- 10: Hauptplatine
- 11: CPU
- 12: RAM-Speicher
- 13: Spannungswandlereinheit
- 14: erster Eingang der Hauptplatine
- 15: erster Ausgang der Hauptplatine
- 16: Chipsatz
- 20: Computer
- 21: Festplatte
- 22: DVD-Laufwerk

## Patentansprüche

1. Stromversorgungseinheit (1) für einen Computer mit einem ersten Eingang (2) zur Zuführung einer Wechselspannung, einem ersten Ausgang (3) für eine erste Versorgungsgleichspannung (12V), wobei die erste Versorgungsgleichspannung (12 V) von der Stromversorgungseinheit (1) über den ersten Ausgang (3) an eine Hauptplatine (10) des Computers zu deren Versorgung geleitet wird,
**dadurch gekennzeichnet, dass**
- ein zweiter Eingang (4) vorgesehen ist zur Zuführung mindestens einer zweiten Versorgungsgleichspannung (5V, 3,3V) an die Stromversorgungseinheit (1), wobei die wenigstens eine weitere Versorgungsgleichspannung (5V, 3,3V) aus der ersten Versorgungsgleichspannung (12V) in der Hauptplatine (10) erzeugt wird,
- eine zweiter Ausgang (5) vorgesehen ist für die erste und zumindest eine zweite Versorgungsgleichspannung (5V, 3,3V),
- die Stromversorgungseinheit (1) dazu eingerichtet ist, die mindestens eine zweite Versorgungsgleichspannung vom zweiten Eingang (4) auf den zweiten Ausgang (5) weiterzuleiten.

2. Stromversorgungseinheit nach Anspruch 1,
**dadurch gekennzeichnet, dass**
der zweite Ausgang (5) Anschlüsse aufweist für die erste und die mindestens eine zweite Versorgungsgleichspannung (12V, 5V) .

3. Stromversorgungseinheit nach Anspruch 2,
**gekennzeichnet durch**
einen Steckverbinder (9), der Anschlüsse für die erste und die mindestens eine zweite Versorgungsgleichspannung aufweist.

4. Stromversorgungseinheit nach einem der Ansprüche 1 bis 3,
**dadurch gekennzeichnet, dass**
die erste Versorgungsspannung 12 V, die zweite Versorgungsspannung 5 V und eine dritte Versorgungsspannung 3,3 V beträgt.

5. Stromversorgungseinheit nach Anspruch 1,
**dadurch gekennzeichnet, dass**
die Weiterleitung ausschließlich durch passive Komponenten oder elektromechanische Schalter (8) erfolgt.

6. Hauptplatine (10) für einen Computer mit
einer Spannungswandlereinheit (13), die dazu eingerichtet ist, im Betrieb aus einer ersten Versorgungsgleichspannung (12V) mindestens eine zweite Versorgungsgleichspannung (5V) zu erzeugen, wobei ein Eingang (14) vorgesehen ist zum Empfang der ersten Versorgungsgleichspannung,
**gekennzeichnet durch**
einen Ausgang (15) zur Zuführung der mindestens einen zweiten Versorgungsgleichspannung zu einer Stromversorgungseinheit nach einem der Ansprüche 1-5.

7. Computer mit
einer Stromversorgungseinheit (1) nach einem der Ansprüche 1 bis 5 und einer Hauptplatine nach Anspruch 6, wobei die Hauptplatine (10) mit der Stromversorgungseinheit (1) verbunden ist zur Zuführung der mindestens einen zweiten Versorgungsgleichspannung zu dem zweiten Eingang (4) der Stromversorgungseinheit (1).

## Claims

1. Power supply unit (1) for a computer comprising
a first input (2) for feeding in an AC voltage,
a first output (3) for a first DC supply voltage (12V), the first DC supply voltage (12V) being conducted from the power supply unit (1) via the first output (3) to a motherboard (10) of the computer for the supply of said motherboard, **characterized in that**
- a second input (4) is provided for feeding at least one second DC supply voltage (5V, 3.3V) to the power supply unit (1), the at least one further DC supply voltage (5V, 3.3V) being generated from the first DC supply voltage (12V) in the motherboard (10),
- a second output (5) is provided for the first and at least one second DC supply voltage (5V, 3.3V),
- the power supply unit (1) is designed to forward the at least one second DC supply voltage from the second input (4) to the second output (5).

2. Power supply unit according to Claim 1,
**characterized in that**
the second output (5) has terminals for the first and the at least one second DC supply voltage, (12V, 5V).

3. Power supply unit according to Claim 2,
**characterized by**
a connector (9) having terminals for the first and the at least one second DC supply voltage.

4. Power supply unit according to any of Claims 1 to 3,
**characterized in that**
the first supply voltage is 12 V, the second supply voltage is 5 V and a third supply voltage is 3.3 V.

5. Power supply unit according to Claim 1,
**characterized in that**
the forwarding is effected exclusively by passive components or electromechanical switches (8).

6. Motherboard (10) for a computer comprising
a voltage converter unit (13), which is designed to generate at least one second DC supply voltage (5b) from a first DC supply voltage (12V) during operation, an input (14) being provided for receiving the first DC supply voltage.
**characterized by**
an output (15) for feeding the at least one second DC supply voltage to a power supply unit according to any of Claims 1-5.

7. Computer comprising
a power supply unit (1) according to any of Claims 1 to 5 and a motherboard according to Claim 6, the motherboard (10) being connected to the power supply unit (1) for the purpose of feeding the at least one second DC supply voltage to the second input (4) of the power supply unit (1).

## Revendications

1. Unité d'alimentation électrique (1) pour un ordinateur, comprenant une première entrée (2) pour l'amenage d'une tension alternative, une première sortie (3) pour une première tension continue d'alimentation (12 V), la première tension continue d'alimentation (12 V) étant amenée depuis l'unité d'alimentation électrique (1) par le biais de la première sortie (3) à une carte-mère (10) de l'ordinateur pour son alimentation,
**caractérisée en ce que**
- il est prévu une deuxième entrée (4) pour l'amenage d'au moins une deuxième tension continue d'alimentation (5 V, 3,3 V) à l'unité d'alimentation électrique (1), l'au moins une tension continue d'alimentation supplémentaire (5 V, 3,3 V) étant générée dans la carte-mère (10) à partir de la première tension continue d'alimentation (12 V),
- il est prévu une deuxième sortie (5) pour la première et au moins une deuxième tension continue d'alimentation (5 V, 3,3 V),
- l'unité d'alimentation électrique (1) est configurée pour transférer l'au moins une deuxième tension continue d'alimentation de la deuxième entrée (4) sur la deuxième sortie (5).

2. Unité d'alimentation électrique selon la revendication 1, **caractérisée en ce que** la deuxième sortie (5) présente des bornes pour la première et l'au moins une deuxième tension continue d'alimentation (12 V, 5 V).

3. Unité d'alimentation électrique selon la revendication 2, **caractérisée par** un connecteur (9) qui présente des bornes pour la première et l'au moins une deuxième tension continue d'alimentation.

4. Unité d'alimentation électrique selon l'une des revendications 1 à 3, **caractérisée en ce que** la première tension d'alimentation est égale à 12 V, la deuxième tension d'alimentation à 5 V et une troisième tension d'alimentation à 3,3 V.

5. Unité d'alimentation électrique selon la revendication 1, **caractérisée en ce que** le transfert est effectué exclusivement par des composants passifs ou des commutateurs électromécaniques (8).

6. Carte-mère (10) pour un ordinateur munie d'une unité de conversion de tension (13) qui est configurée pour générer en fonctionnement, à partir d'une première tension continue d'alimentation (12 V), au moins une deuxième tension continue d'alimentation (5 V), une entrée (14) étant prévue pour recevoir la première tension continue d'alimentation,
**caractérisée par**
une sortie (15) pour l'amenage de l'au moins une deuxième tension continue d'alimentation à une unité d'alimentation électrique selon l'une des revendications 1 à 5.

7. Ordinateur comprenant une unité d'alimentation électrique (1) selon l'une des revendications 1 à 5 et une carte-mère selon la revendication 6, la carte-mère (10) étant reliée à l'unité d'alimentation électrique (1) pour l'amenage de l'au moins une deuxième tension continue d'alimentation à la deuxième entrée (4) de l'unité d'alimentation électrique (1).
